# EUROPEAN PATENT SPECIFICATION

(11) **EP 3 741 277 B1**
(45) Date of publication and mention of the grant of the patent: **18.10.2023**
(21) Application number: 19914715.8
(22) Date of filing: 19.03.2019
(51) Int. Cl.: A47L 9/04

(54) **ROLLING BRUSH DEVICE AND CLEANING APPARATUS**
WALZENBÜRSTE UND REINIGUNGSVORRICHTUNG
DISPOSITIF DE BROSSE ROULANTE ET APPAREIL DE NETTOYAGE

(30) Priority: 12.02.2019 CN 201910111720
(43) Date of publication of application: 25.11.2020
(73) Proprietor: Midea Robozone Technology Co., Ltd., Suzhou, Jiangsu Province (CN)
(72) Inventor: HE, Bo, Suzhou, Jiangsu 215100 (CN); XU, Xiaowei, Suzhou, Jiangsu 215100 (CN)
(74) Representative: RGTH
(86) International application number: PCT/CN2019/078667
(87) International publication number: WO 2020/164170

(56) References cited:
- CN-A- 101 375 785
- CN-A- 103 767 627
- CN-A- 105 455 733
- CN-A- 105 615 771
- CN-U- 202 477 563
- CN-U- 204 146 956
- CN-U- 204 565 558
- CN-U- 205 379 266
- CN-U- 205 433 567
- CN-U- 208 709 766
- JP-A- 2003 204 902
- US-A1- 2018 199 785

## Description

### FIELD

The present disclosure relates to a technical field of cleaning appliances, and more particularly to a roller brush device and a cleaning apparatus.

### BACKGROUND

Take the robot vacuum cleaner as an example, a roller brush of an existing robot vacuum cleaner is located at a bottom thereof. When the roller brush needs to be cleaned or replaced, the robot vacuum cleaner needs to be turned over such that the bottom of the robot faces upwards, and then a bottom cover for the roller brush is opened and the roller brush is dismounted for cleaning. After the roller brush is cleaned or replaced, the roller brush is mounted to the robot vacuum cleaner, and then, the robot vacuum cleaner is turned over again. In the above-mentioned robot vacuum cleaner, the mounting and dismounting processes of the roller brush needs to turn the robot vacuum cleaner over for several times, which is not convenient for the mounting and dismounting of the roller brush.

CN 204146956 U discloses an intelligent cleaning robot comprises a shell, wherein a ground brush assembly is positioned on the shell, and is provided with a first accommodating cavity and a second accommodating cavity; the first accommodating cavity and the second accommodating cavity are isolated from each other through a clapboard.

CN103767627 A discloses a brush roll assembly comprising an upper brush roll main body, a lower brush roll bottom cover which is fastened to the brush roll main body, a brush roll body arranged between the brush roll main body and the brush roll bottom cover, wherein the brush roll main body comprises a pair of rotating arms, which extend from one end of the brush roll main body and are correspondingly provided with rotating axises.

US 2018/199785 A1 discloses a mobile cleaning robot that includes a chassis that supports a drive system, a debris collection volume; and a cleaning head formed to complete a bottom of the robot.

### SUMMARY

In view of this, the present invention is intended to provide a roller brush device and a cleaning apparatus which facilitate mounting and dismounting. To achieve the above objective, one aspect of embodiments of the present invention provides a roller brush device including a roller brush and a mounting assembly. The roller brush is connected with the mounting assembly, the roller brush is rotatable relative to the mounting assembly, and the mounting assembly is capable of driving the roller brush to move. A side of the mounting assembly being provided with an avoidance notch, and the roller brush is exposed at the avoidance notch.

Furthermore, the mounting assembly includes a mounting rack and a shielding plate, an interior of the mounting rack is hollow, the shielding plate is sealablly arranged in the interior of the mounting rack to separate a space in the mounting rack into a first space and a second space isolated from each other, and the first space is formed into at least part of the accommodating cavity.

Furthermore, the roller brush device includes a lifting portion connected with the mounting rack, and at least a part the lifting portion is exposed at a top side of the mounting rack.

Furthermore, the mounting assembly is provided with an accommodating cavity and an air outlet, the roller brush includes a roller brush shaft and a brush, the roller brush shaft is arranged in the accommodating cavity, the avoidance notch is arranged on a bottom side of the accommodating cavity, the air outlet is arranged on a side of the accommodating cavity different from the bottom side, and an air flow in the accommodating cavity is capable of being discharged out of the accommodating cavity through the air outlet.

Furthermore, the mounting assembly includes a bottom cover and a mounting rack, the bottom cover is detachably connected with the mounting rack, the avoidance notch is formed on the bottom cover, the roller brush comprises a roller brush shaft and a brush, and the roller brush shaft is mounted to the mounting rack and/or the bottom cover.

Furthermore, the bottom cover includes a bottom plate and a skirt portion extending from an edge of the bottom plate toward the mounting rack, the avoidance notch is formed on the bottom plate, two sides of the skirt portion along an axial direction of the roller brush are provided with a first mounting notch, two sides of the bottom of the mounting rack are provided with a second mounting notch, and the first mounting notch and the corresponding second mounting notch enclose a mounting hole, and two axial ends of the roller brush shaft rotatably pass through the mounting hole.

Furthermore, a bottom end face of the bottom cover away from the mounting rack is formed into an inclined face, the roller brush device also includes a roller supporting portion rotatably arranged to a lower side of the bottom end face of the bottom cover, at least a part the roller supporting portion protrudes from the bottom end face of the bottom cover, and a rotation center line of the roller supporting portion is parallel to a rotation center line of the roller brush.

Furthermore, the roller supporting portion is formed into a roller shaft.

Furthermore, the mounting rack is made of a transparent material.

Furthermore, the roller brush device includes a first driving connection portion configured to connect a power source, and the first driving connection portion is drivingly connected with at least one shaft end of the roller brush.

Another aspect of embodiments of the present invention provides a cleaning apparatus, which includes a main body portion and any one of the above roller brush devices. The main body portion is provided with a mounting cavity therein, a bottom side of the mounting cavity is provided with a first opening, and the roller brush is exposed at the first opening. A side of the mounting cavity different from the bottom side is provided with a second opening, and the roller brush device is capable of being mounted in or removed from the mounting cavity through the second opening.

Furthermore, the second opening is provided at a top side of the main body portion.

Furthermore, an inner wall of the mounting cavity is provided with a step surface, the mounting assembly is provided with a flange structure, and the flange structure is supported on the step surface.

Furthermore, the cleaning apparatus includes a second driving connection portion; the roller brush device includes a first driving connection portion, the first driving connection portion is drivingly connected with at least one shaft end of the roller brush, and the second driving connection portion and the first driving connection portion is capable of switching between a driving connection and a disconnection.

Furthermore, the second driving connection portion is capable of reciprocating along an axial direction of the roller brush, the second driving connection portion moves to a first preset position along a direction away from the first driving connection portion, the second driving connection portion is disconnected from the first driving connection portion; the second driving connection portion moves to a second preset position along a direction toward the first driving connection portion, and the second driving connection portion and the first driving connection portion are drivingly connected.

Furthermore, a plurality of first claws are provided at a side of the first driving connection portion facing the second driving connection portion, a plurality of second claws are provided at a side of the second driving connection portion facing the first driving connection portion, and the plurality of the second claws engage the plurality of the first claws by insertion.

Furthermore, the cleaning apparatus is a robot vacuum cleaner.

The roller brush device according to embodiments of the present invention by connecting the roller brush and the mounting assembly, when the roller brush needs to be dismounted, the whole roller brush device may be removed from a top or a side of the cleaning apparatus, or the whole roller brush device may be mounted into the cleaning apparatus from the top or the side of the cleaning apparatus, without turning over the cleaning apparatus, which is not only convenient for the user to dismount by himself, but also may avoid the scratches of the appearance of the cleaning apparatus caused by turning over the cleaning apparatus.

### BRIEF DESCRIPTION OF THE DRAWINGS

The attached drawings are used to provide a further understanding of the present inverntion and constitute a part of the description, which are used to explain the present inverntion with reference to the following specific embodiments, and are not construed as the limitation of the present inverntion In which:
Fig. 1 is a schematic view of a cleaning apparatus according to an embodiment of the present inverntion.
Fig. 2 is a schematic view of another perspective of the cleaning apparatus illustrated in Fig. 1;
Fig. 3 is a partial exploded view of the cleaning apparatus illustrated in Fig. 1;
Fig. 4 is a schematic view of a roller brush device according to an embodiment of the present inverntion.
Fig. 5 is a schematic view of another perspective of the roller brush device illustrated in Fig. 4;
Fig. 6 is a schematic view of yet another perspective of the roller brush device illustrated in Fig. 4;
Fig. 7 is an exploded view of the roller brush device illustrated in Fig. 4;
Fig. 8 is a schematic view of a fitting structure of the roller brush device illustrated in Fig. 4 with a second driving connection portion, a conveyor belt and an electric motor of an embodiment; and
Fig. 9 is a schematic view of a second driving connection portion according to an embodiment of the present invention.

### Reference numerals:

### Description of reference numerals

main body portion 10; mounting cavity 101; first opening 102; second opening 103; step surface 104; roller brush device 20; roller brush 21; roller brush shaft 210; bristle 211; mounting rack 22; flange structure 221; first space 22a; second space 22b; second mounting notch 22c; shielding plate 23; bottom cover 24; bottom plate 241; skirt portion 242; first mounting notch 24a; avoidance notch 20a; air outlet 20b; accommodating cavity 20c; mounting hole 20d; lifting portion 25; first driving connection portion 27; first claw 271; roller supporting portion 28; second driving connection portion 31; second claw 311; electric motor 32; conveyor belt 33.

### DETAILED DESCRIPTION

It should be noted that, in the case of non-contradiction, embodiments of the present inverntion and the technical features of the embodiments may be combined with each other. It should be understood that the specific embodiments described herein are only used for explaining the present invention but should not be construed to limit the present disclosure.

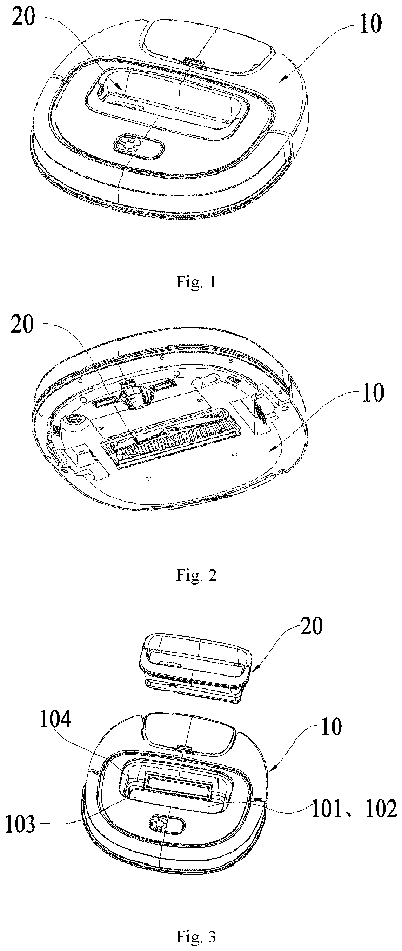

In the description of the present disclosure, it should be understood that, terms such as "top," "bottom," "lateral," indicate the orientation or position relationship based on the orientation or position relationship illustrated in the Fig. 1 only for convenience of description or for simplifying description of the present invention and do not indicate or imply that the device or element referred to must have a particular orientation or be constructed and operated in a specific orientation, and hence cannot be construed as a limitation to the present invention.

Place a cleaning apparatus on a surface of the cleaning medium, such as ground. A side close to the cleaning medium is "bottom", and a side away from the cleaning medium is "top".

An embodiment of the present invention provides a roller brush device 20. In order to simplify description, in the embodiment of the present disclosure, a roller brush device 20 applied to the cleaning apparatus is described as an example. In a specific embodiment, the cleaning apparatus is described as a robot vacuum cleaner for an example. It should be understood that the cleaning apparatus may be of other types. The roller brush device 20 according to embodiments of the present invention may also be used for other devices.

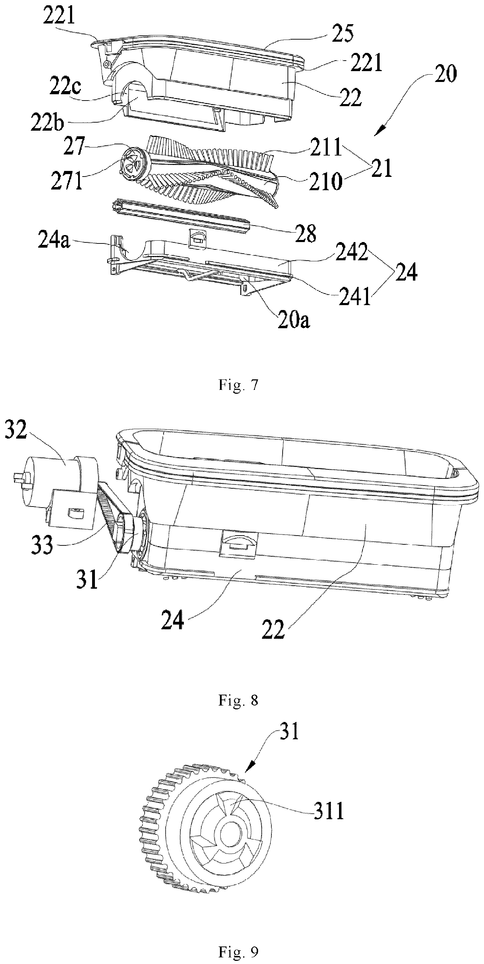

Referring to Fig. 7, the roller brush device 20 according to the embodiment of the present invention includes a roller brush 21 and a mounting assembly. The roller brush 21 is connected with the mounting assembly. The roller brush 21 is rotatable relative to the mounting assembly, and the mounting assembly may drive the roller brush 21 to move. An avoidance notch 20a is defined in a side of the mounting assembly, and the roller brush 21 is exposed at the avoidance notch 20a. The roller brush device 20 of the embodiment of the present disclosure may realize the convenient mounting and dismounting of the roller brush 21 by connecting the roller brush 21 with the mounting assembly. In a specific operation process, for example, when the roller brush 21 needs to be dismounted, the whole roller brush device 20 may be removed from a top or a side of the cleaning apparatus, or the whole roller brush device 20 may be mounted into the cleaning apparatus from the top or the side of the cleaning apparatus, without turning over the cleaning apparatus, which is not only convenient for the user to dismount by himself, but also may avoid the scratches of the appearance of the cleaning apparatus caused by turning over the cleaning apparatus.

Referring to Fig. 7 again, the roller brush 21 refers to a structure that may rotate on its own and clean a cleaning medium such as ground. In the embodiment of the present invention the roller brush 21 includes a roller brush shaft 210 and a brush 211 connected with the roller brush shaft 210. The connection method between the brush 211 and the roller brush shaft 210 is not limited, and the shape and material of the brush is not limited, for example, which may be a brush strip, fluff, and the like.

The embodiment of the present invention is described with an example that the roller brush device 20 may be dismounted from the top of the cleaning apparatus.

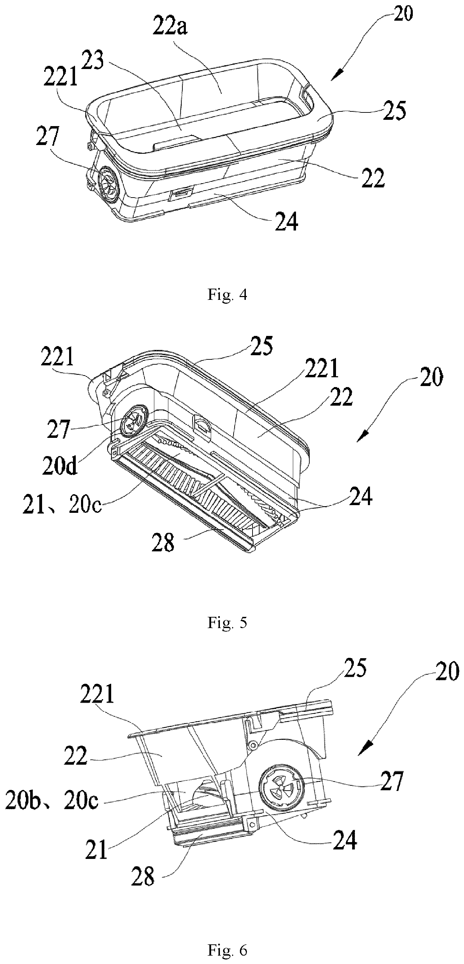

The mounting assembly may provide a mounting position and support for the roller brush 21, which facilitates the mounting and dismounting of the roller brush 21. Referring to Fig. 6, in one embodiment of the present disclosure, the mounting assembly is provided with an accommodating cavity 20c and an air outlet 20b, the roller brush shaft 210 is accommodated in the accommodating cavity 20c, the avoidance notch 20a is defined in a bottom side of the accommodating cavity 20c, i.e. a side facing the cleaning medium, and the brush 211 may extend out of the avoidance notch 20a to contact the cleaning medium. The air outlet 20b is defined in a side of the accommodating cavity 20c different from the bottom side. That is, the air outlet 20b is not arranged in the bottom side but in a top side or a lateral side of the accommodating cavity 20c. An air flow in the accommodating cavity 20c is discharged out of the accommodating cavity 20c through the air outlet 20b, and that is, the air outlet 20b is communicated with the accommodating cavity 20c. A negative pressure may be formed in the accommodating cavity 20c to facilitate sucking dust, hair, and the like, and the air flow mixed with dust, hair and other debris flows to a dust collection structure (not illustrated in the drawings) of the cleaning apparatus through the air outlet 20b.

In one embodiment of the present invention referring to Fig. 4, the mounting assembly includes a mounting rack 22 and a shielding plate 23. An interior of the mounting rack 22 is hollow, and the mounting rack 22 has a generally hollow cylinder shape. A top and a bottom of the mounting rack 22 are formed into an open structure. The shielding plate 23 is sealablly arranged in the interior of the mounting rack 22, and that is, a periphery of the shielding plate 23 sealablly abuts against an inner wall of the mounting rack 22, to separate a space in the mounting rack 22 into a first space 22a and a second space 22b which are isolated from each other. The first space 22a is formed into at least part of the accommodating cavity 20c, and the air outlet 20b is defined in a lateral side of the accommodating cavity 20c and communicated with the first space 22a, and that is, the first space 22a may be or may be part of the accommodating cavity 20c. The spaces of the bottom and the top of the mounting rack 22 may be separated by the shielding plate 23, such that an air flow in the first space 22a is discharged along the air outlet 20b rather than is discharged from other positions of the mounting rack 22, to better form a negative pressure and improve the cleaning effect. It should be understood that, in order to facilitate the user to observe the operating condition of the roller brush 21 intuitively, the shielding plate 23 may be made of a transparent material.

In order to facilitate the user to lift the roller brush device 20, in one embodiment of the present invention referring to Fig. 4 again, the mounting assembly also includes a lifting portion 25. The lifting portion 25 is connected with the mounting rack 22, and at least part of the lifting portion 25 is exposed at a top side of the mounting rack 22. In a specific operation process, the user may grab the lifting portion 25 to lift the roller brush device 20 out of the cleaning apparatus. A structure of the lifting portion 25 is not limited, for example, which may be a protruding structure protruded from the second space 22b of the mounting rack 22 or may be a rotatable handle. In the specific embodiment of the present disclosure, the lifting portion 25 is formed into the rotatable handle. When the roller brush device 20 is mounted in the cleaning apparatus, the handle is fitted with the top of the mounting rack 22. When the roller brush device 20 needs to be removed, the above handle may be lifted after being rotated by a certain angle.

In one embodiment of the present invention referring to Fig. 5, a flange structure 221 is formed on the top of the mounting rack 22, and the roller brush device 20 may be stably supported in the cleaning apparatus by the flange structure 221. It should be understood that, the above handle may be fitted with a top surface of the flange structure 221 in order to compact the structure.

In order to facilitate the mounting of the roller brush 21 and prevent large-sized objects from being sucked into the accommodating cavity 20c, in one embodiment of the present disclosure, referring to Fig. 7, the mounting assembly includes a bottom cover 24, the bottom cover 24 is detachably connected with the mounting rack 22, and the avoidance notch 20a is defined in the bottom cover 24. That is, the bottom cover 24 is arranged to a bottom side of the mounting rack 22. In the present embodiment, the bottom cover 24, the mounting rack 22 and the shielding plate 23 enclose the accommodating cavity 20c, and that is, in the present embodiment, the first space 22a serves as part of the accommodating cavity 20c. When the roller brush 21 needs to be dismounted, the bottom cover 24 may be separated from the mounting rack 22 after the roller brush device 20 is removed from the cleaning apparatus, and then the roller brush 21 may be removed.

Referring to Fig. 6, a bottom end face of the bottom cover 24 away from the mounting rack 22 is formed into an inclined face. The roller brush device also includes a roller supporting portion 28, the roller supporting portion 28 is rotatably arranged to a lower side of the bottom end face of the bottom cover 24, and at least a part of the roller supporting portion 28 protrudes from the bottom end face of the bottom cover 24, such that the roller supporting portion 28 may be rollingly supported on a surface of the cleaning medium. A rotation center line of the roller supporting portion 28 is parallel to that of the roller brush 21. By setting the bottom end face of the bottom cover 24 as the inclined face, the roller supporting portion 28 is supported on the surface of the cleaning medium during the operation of the cleaning apparatus, and the other side of the bottom cover 24 opposite to the side where the roller supporting portion 28 is located is separated from the surface of the cleaning medium, such that a certain gap exists between the bottom end face of the bottom cover 24 and the surface of the cleaning medium, facilitating surrounding air to enter the accommodating cavity 20c under the action of the negative pressure in the accommodating cavity 20c.

Referring to Fig. 6 again, in the embodiment of the present invention the roller supporting portion 28 is formed into a roller shaft, which plays a rolling support role as well as maintains a good contact with the surface of the cleaning medium, to improve the negative pressure effect in the accommodating cavity 20c.

The bottom cover 24 may protect the roller brush 21 and prevent large-size objects from being sucked into the accommodating cavity 20c. The bottom cover 24 may also facilitate the mounting of the roller brush 21. Specifically, the roller brush 21 is mounted to the mounting rack 22 and/or the bottom cover 24. That is, the roller brush 21 may only be mounted to the mounting rack 22; or may also only be mounted to the bottom cover 24, or may also be mounted at a junction of the mounting rack 22 and the bottom cover 24, which is connected with both of the mounting rack 22 and the bottom cover 24.

In the embodiment of the present invention referring to Figs.4 to 6, the roller brush 21 is mounted at the junction of the mounting rack 22 and the bottom cover 24.

In the embodiment of the present invention referring to Fig. 7, the bottom cover 24 includes a bottom plate 241 and a skirt portion 242 extending from an edge of the bottom plate 241 toward the mounting rack 22. The avoidance notch 20a is formed on the bottom plate 241. A top surface of the skirt portion 242 is fittingly contacted with the bottom surface of the mounting rack 22, such that there is no air leakage at a junction of the skirt portion 242 and the mounting rack 22. The connection method of the skirt portion 242 and the mounting rack 22 is not limited, as long as a detachable connection may be realized.

Referring to Fig. 7, two sides of the skirt portion 242 along the axial direction of the roller brush 21 are provided with first mounting notches 24a, two sides of the bottom of the mounting rack 22 are provided with second mounting notches 22c, and the first mounting notch 24a and the corresponding second mounting notch 22c enclose a mounting hole 20d (referring to Fig. 5). That is, one first mounting notch 24a corresponds to one second mounting notch 22c, and two mounting holes 20 are defined in total. Two axial ends of the roller brush shaft 210 rotatably pass through the corresponding mounting holes 20d. In such a way, when the bottom cover 24 is dismounted from the mounting rack 22, the roller brush 21 may be removed from the mounting assembly.

In order to facilitate driving connection of the roller brush 21, in one embodiment of the present invention referring to Fig. 7, the roller brush device 20 includes a first driving connection portion 27, and the first driving connection portion 27 is drivingly connected with at least one shaft end of the roller brush 21. Exemplarily, an end face of the first driving connection portion 27 away from the mounting rack 22 forms a plurality of first claws 271. The power mechanism may drive the first driving connection portion 27 to rotate, and then drive the roller brush 21 to rotate synchronously by the cooperation of the first claw 271 and the power mechanism.

Referring to Figs. 1-3, another aspect of embodiments of the present invention provides a cleaning apparatus, which includes a main body portion 10 and any one of the above roller brush devices 20.

Referring to Fig. 3, a mounting cavity 101 is provided in the main body portion 10, a first opening 102 is provided in a bottom side of the mounting cavity 101, and the roller brush 21 is exposed at the first opening 102. A second opening 103 is provided in a side of the mounting cavity 101 different from the bottom side, and that is, the second opening 103 will not be arranged in the bottom side. For example, the second opening 103 may be arranged in a top side or the lateral side of the mounting cavity 101, and the roller brush device 20 may be mounted in or removed from the mounting cavity 101 through the second opening 103. In a specific operation process, when the roller brush 21 is dismounted, the whole roller brush device 20 only needs to be removed from the mounting cavity 101 via the second opening 103 without turning over the cleaning apparatus; when the roller brush 21 needs to be mounted, the whole roller brush device 20 only needs to be mounted into the mounting cavity 101 through the second opening 103, which is convenient for the mounting and dismounting, such that the top surface of the main body portion 10 can be prevented from scratches due to turning upside down.

In one embodiment of the present invention the second opening 103 is located in a top of the main body portion 10, to facilitate the user to directly remove the roller brush device 20; and a top space is large enough to mount or remove the roller brush device 20, to more conveniently mount and dismount the roller brush device 20.

In order to facilitate positioning the roller brush device 20, referring to Fig. 3, a step surface 104 is formed at an inner wall of the mounting cavity 101, and the step surface 104 faces the top of the main body portion 10. Correspondingly, a flange structure 221 is formed on the mounting assembly. In the embodiment of the present invention the flange structure 221 is formed on the top of the mounting rack 22, the roller brush device 20 is mounted into the mounting cavity 101 from the second opening 103, the flange structure 221 abuts against the step surface 104, and the step surface 104 may support the roller brush device 20.

Referring to Figs. 8 and 9, the cleaning apparatus also includes a second driving connection portion 31, and the second driving connection portion 31 and the first driving connection portion 27 may switch between a driving connection and a disconnection. For example, when the roller brush device 20 needs to be removed from the mounting cavity 101, the second driving connection portion 31 and the first driving connection portion 27 are disconnected, and when the roller brush device 20 is mounted in the mounting cavity 101 and does not need to be removed, the second driving connection portion 31 and the first driving connection portion 27 are drivingly connected.

The second driving connection portion 31 may reciprocate along an axial direction of the roller brush 21. Specifically, when the roller brush device 20 needs to be removed from the mounting cavity 101, the second driving connection portion 31 moves to a first preset position along a direction away from the first driving connection portion 27 and the second driving connection portion 31 is disconnected from the first driving connection portion 27. When the roller brush device 20 is mounted in the mounting cavity 101 and does not need to be removed, the second driving connection portion 31 moves to a second preset position along a direction toward the first driving connection portion 27, and the second driving connection portion 31 and the first driving connection portion 27 are realized to be drivingly connected.

It should be noted that the above first preset position meets the following requirements: the second driving connection portion 31 is in the first preset position, and the second driving connection portion 31 does not interfere with the first driving connection portion 27. The second preset position meets the following requirements: the second driving connection portion 31 is in the second preset position, and the second driving connection portion 31 may be drivingly connected with the first driving connection portion 27 to drive the first driving connection portion 27 to rotate.

There are various ways to implement movement of the second driving connection portion 31 moves along the direction of the roller brush shaft 210. Exemplarily, the cleaning apparatus includes a restoring member (not illustrated in the drawings) and a transmission control mechanism (not illustrated in the drawings). The restoring member applies a driving force to the second driving connection portion 31 toward the first driving connection portion 27, and the restoring member may be a spring, a rubber band or a magnet. The transmission control mechanism applies a force opposite to the above driving force to the restoring member and/or the second driving connection portion 31 when the roller brush device 20 needs to be removed. For example, the transmission mechanism may include a button arranged on an outer surface of the cleaning apparatus, when the roller brush device 20 needs to be removed, the user presses the button, the force applied by the transmission mechanism overcomes the driving force of the above restoring member, forcing the second driving connection portion 31 to move along a direction away from the first driving connection portion 27, to make room for a clearance space, preventing an interference with the first driving connection portion 27 during a removal process. In a case that the roller brush device 20 doesn't need to be removed, the transmission control mechanism does not work, and the second driving connection portion 27 maintains to be drivingly connected with the first driving connection portion 27 under an action of the restoring member.

In the embodiment of the present invention referring to Fig. 7, the first driving connection portion 27 is generally in disc shape and forms a plurality of first claws 271 extending toward the second driving connection portion 31. Referring to Fig. 9, the second driving connection portion 31 forms a plurality of second claws 311 extending toward the first driving connection portion 27. The first claw 271 and the second claw 311 are staggered and inserted with each other, and when the second driving connection portion 31 rotates, the second claws 311 drive the first claws 271 to rotate, thereby realizing that the first driving connection portion 27 drives the roller brush 21 to rotate.

Referring to Fig. 8, the cleaning apparatus also includes an electric motor 32 and a conveyor belt 33, and the conveyor belt 33 is connected between the electric motor 32 and the second driving connection portion 31. The conveyor belt 33 may be structures such as a belt, a chain or the like. The conveyor belt 33 has a certain length to have certain flexibility, and may allow the second driving connection portion 31 to move axially.

The above embodiments are merely preferable embodiments of the present invention and cannot be construed to limit the present invention.

## Claims

1. A roller brush device, comprising:
a roller brush (21); and
a mounting assembly connected with the roller brush (21), the roller brush (21) being rotatable relative to the mounting assembly, the mounting assembly being capable of driving the roller brush (21) to move, a side of the mounting assembly being provided with an avoidance notch (20a), and the roller brush (21) being exposed at the avoidance notch (20a),
wherein the mounting assembly comprises a mounting rack (22) and a shielding plate (23), an interior of the mounting rack (22) is hollow, the shielding plate (23) is sealably arranged in the interior of the mounting rack (22) to separate a space in the mounting rack (22) into a first space (22a) and a second space (22b) isolated from each other, and the first space (22a) is formed into at least a part of the accommodating cavity (20c),
**characterized in that** the roller brush device further comprises a lifting portion (25) connected with the mounting rack (22), and at least a part of the lifting portion (25) being exposed at a top side of the mounting rack (22).

2. The roller brush device according to claim 1, wherein the mounting assembly is provided with an accommodating cavity (20c) and an air outlet (20b), the roller brush (21) comprises a roller brush shaft (210) and a brush (211), the roller brush shaft (210) is arranged in the accommodating cavity (20c), the avoidance notch (20a) is arranged on a bottom side of the accommodating cavity (20c); the air outlet (20b) is arranged on a side of the accommodating cavity (20c) different from the bottom side, and an air flow in the accommodating cavity (20c) is capable of being discharged out of the accommodating cavity (20c) through the air outlet (20b).

3. The roller brush device according to any one of claims 1 to 2, wherein the mounting assembly comprises a bottom cover (24) and a mounting rack (22), the bottom cover (24) is detachably connected with the mounting rack (22), the avoidance notch (20a) is formed on the bottom cover (24), the roller brush (21) comprises a roller brush shaft (210) and a brush (211), and the roller brush shaft (210) is mounted on the mounting rack (22) and/or the bottom cover (24).

4. The roller brush device according to claim 3, wherein the bottom cover (24) comprises a bottom plate (241) and a skirt portion (242) extending from an edge of the bottom plate (241) towards the mounting rack (22), the avoidance notch (20a) is formed on the bottom plate (241), two sides of the skirt portion (242) along an axial direction of the roller brush (21) are provided with a first mounting notch (24a), two sides of the bottom of the mounting rack (22) are provided with a second mounting notch (22c), and the first mounting notch (24a) and the corresponding second mounting notch (22c) enclose a mounting hole (20d), and two axial ends of the roller brush shaft (210) rotatably pass through the mounting hole (20d).

5. The roller brush device according to claim 3 or 4, wherein a bottom end face of the bottom cover (24) away from the mounting rack (22) is formed into an inclined face, the roller brush device further comprises a roller supporting portion (28) rotatably arranged at a lower side of the bottom end face of the bottom cover (24), at least a part of the roller supporting portion (28) protrudes from the bottom end face of the bottom cover (24), and a rotation center line of the roller supporting portion (28) is parallel to a rotation center line of the roller brush (21) wherein the roller supporting portion (28) is preferably formed into a roller shaft.

6. The roller brush device according to any one of claims 1-5, wherein the mounting rack (22) is made of a transparent material.

7. The roller brush device according to any one of claims 1 to 6, comprising: a first driving connection portion (27) drivingly connected with at least one shaft end of the roller brush (21).

8. A cleaning apparatus, comprising: a main body portion (10) and a roller brush devices (20) according to any one of the claims 1-7, wherein the main body portion (10) is provided with a mounting cavity (101) therein, a bottom side of the mounting cavity (101) is provided with a first opening (102), the roller brush (21) is exposed at the first opening (102), a side of the mounting cavity (101) different from the bottom side is provided with a second opening (103), and the roller brush device is capable of being mounted into or removed from the mounting cavity (101) through the second opening (103).

9. The cleaning apparatus according to claim 8, wherein the second opening (103) is provided at a top side of the main body portion (10).

10. The cleaning apparatus according to claim 8 or 9, wherein an inner wall of the mounting cavity (101) is provided with a step surface (104), the mounting assembly is provided with a flange structure (221), and the flange structure (221) is supported on the step surface (104).

11. The cleaning apparatus according to any one of claims 8 to 10, comprising a second driving connection portion (31), the roller brush device comprising a first driving connection portion (27), the first driving connection portion (27) being drivingly connected with at least one shaft end of the roller brush (21), and the second driving connection portion (31) and the first driving connection portion (27) being capable of switching between a driving connection and a disconnection.

12. The cleaning apparatus according to claim 11, wherein the second driving connection portion (31) is capable of reciprocating along an axial direction of the roller brush (21), the second driving connection portion (31) moves to a first preset position along a direction away from the first driving connection portion (27), the second driving connection portion (31) is disconnected from the first driving connection portion(27); the second driving connection portion (31) moves to a second preset position along a direction towards the first driving connection portion(27), and the second driving connection portion (31) and the first driving connection portion (27) are drivingly connected.

13. The cleaning apparatus according to claim 11 or 12, wherein a plurality of first claws (271) are provided at a side of the first driving connection portion (27) facing the second driving connection portion (31), a plurality of second claws (311) are provided at a side of the second driving connection portion (31) facing the first driving connection portion (27), and the plurality of the second claws (311) engage a plurality of the first claws (271) by insertion.

14. The cleaning apparatus according to any one of claims 8-13, wherein the cleaning apparatus is a robot vacuum cleaner.

## Patentansprüche

1. Walzenbürstenvorrichtung, umfassend:
eine Walzenbürste (21); und
eine Montageanordnung, die mit der Walzenbürste (21) verbunden ist, wobei die Walzenbürste (21) relativ zu der Montageanordnung drehbar ist, wobei die Montageanordnung in der Lage ist, die Walzenbürste (21) anzutreiben, sich zu drehen, wobei eine Seite der Montageanordnung mit einer Ausweichkerbe (20a) versehen ist und die Walzenbürste (21) an der Ausweichkerbe (20a) freiliegt,
wobei die Montageanordnung ein Montagegestell (22) und eine Abschirmplatte (23) umfasst, ein Innenraum des Montagegestells (22) hohl ist, die Abschirmplatte (23) abdichtend im Innenraum des Montagegestells (22) angeordnet ist, um einen Raum in dem Montagegestell (22) in einen ersten Raum (22a) und einen zweiten Raum (22b), die voneinander isoliert sind, zu trennen, und der erste Raum (22a) als mindestens ein Teil des Aufnahmehohlraums (20c) ausgebildet ist,
**dadurch gekennzeichnet, dass** die Walzenbürstenvorrichtung ferner einen Hebebereich (25) umfasst, der mit dem Montagegestell (22) verbunden ist, und
dass zumindest ein Teil des Hebebereichs (25) an einer Oberseite des Montagegestells (22) freiliegt.

2. Walzenbürstenvorrichtung gemäß Anspruch 1, wobei die Montageanordnung mit einem Aufnahmehohlraum (20c) und einem Luftauslass (20b) versehen ist, die Walzenbürste (21) eine Walzenbürstenwelle (210) und eine Borste (211) umfasst, die Walzenbürstenwelle (210) in dem Aufnahmehohlraum (20c) angeordnet ist, die Ausweichkerbe (20a) an einer Unterseite des Aufnahmehohlraums (20c) angeordnet ist; der Luftauslass (20b) auf einer Seite des Aufnahmehohlraums (20c) angeordnet ist, die sich von der Bodenseite unterscheidet, und ein Luftstrom in dem Aufnahmehohlraum (20c) aus dem Aufnahmehohlraum (20c) durch den Luftauslass (20b) ausgestoßen werden kann.

3. Walzenbürstenvorrichtung gemäß einem der Ansprüche 1 bis 2, wobei die Montageanordnung eine Bodenabdeckung (24) und ein Montagegestell (22) umfasst, die Bodenabdeckung (24) lösbar mit dem Montagegestell (22) verbunden ist, die Ausweichkerbe (20a) an der Bodenabdeckung (24) ausgebildet ist, die Walzenbürste (21) eine Walzenbürstenwelle (210) und eine Borste (211) umfasst, und die Walzenbürstenwelle (210) an dem Montagegestell (22) und/oder der Bodenabdeckung (24) montiert ist.

4. Walzenbürstenvorrichtung gemäß Anspruch 3, wobei die Bodenabdeckung (24) eine Bodenplatte (241) und einen Schürzenbereich (242) umfasst, der sich von einer Kante der Bodenplatte (241) in Richtung des Montagegestells (22) erstreckt, die Ausweichkerbe (20a) an der Bodenplatte (241) ausgebildet ist, zwei Seiten des Schürzenbereichs (242) entlang einer axialen Richtung der Walzenbürste (21) mit einer ersten Montagekerbe (24a) versehen sind, zwei Seiten des Bodens des Montagegestells (22) mit einer zweiten Montagekerbe (22c) versehen sind, und die erste Montagekerbe (24a) und die entsprechende zweite Montagekerbe (22c) ein Montageloch (20d) umschließen, und zwei axiale Enden der Walzenbürstenwelle (210) drehbar durch das Montageloch (20d) hindurchgehen.

5. Walzenbürstenvorrichtung gemäß Anspruch 3 oder 4, wobei eine untere Endfläche der Bodenabdeckung (24), die von dem Montagegestell (22) entfernt ist, als eine geneigte Fläche ausgebildet ist, wobei die Walzenbürstenvorrichtung ferner einen Walzenstützbereich (28) umfasst, der drehbar an einer unteren Seite der unteren Endfläche der Bodenabdeckung (24) angeordnet ist, zumindest ein Teil des Walzenstützbereichs (28) von der unteren Endfläche der Bodenabdeckung (24) vorsteht und eine Rotationsmittellinie des Walzenstützbereichs (28) parallel zu einer Rotationsmittellinie der Walzenbürste (21) ist, wobei der Walzenstützbereich (28) bevorzugt als eine Walzenwelle ausgebildet ist.

6. Walzenbürstenvorrichtung gemäß einem der Ansprüche 1 bis 5, wobei das Montagegestell (22) aus einem transparenten Material besteht.

7. Walzenbürstenvorrichtung gemäß einem der Ansprüche 1 bis 6, umfassend: einen ersten Antriebsverbindungsbereich (27), der mit mindestens einem Wellenende der Walzenbürste (21) in Antriebsverbindung steht.

8. Reinigungsgerät, umfassend: einen Hauptkörperbereich (10) und eine Walzenbürstenvorrichtung (20) gemäß einem der Ansprüche 1 bis 7, wobei der Hauptkörperbereich (10) mit einem Montagehohlraum (101) darin versehen ist, eine Bodenseite des Montagehohlraums (101) mit einer ersten Öffnung (102) versehen ist, die Walzenbürste (21) an der ersten Öffnung (102) freiliegt, eine Seite des Montagehohlraums (101), die sich von der Bodenseite unterscheidet, mit einer zweiten Öffnung (103) versehen ist und die Walzenbürstenvorrichtung durch die zweite Öffnung (103) in den Montagehohlraum (101) eingebaut oder aus diesem entfernt werden kann.

9. Reinigungsgerät gemäß Anspruch 8, wobei die zweite Öffnung (103) an einer Oberseite des Hauptkörperbereichs (10) vorgesehen ist.

10. Reinigungsgerät gemäß Anspruch 8 oder 9, wobei eine Innenwand des Montagehohlraums (101) mit einer Stufenfläche (104) versehen ist, die Montageanordnung mit einer Flanschstruktur (221) versehen ist und die Flanschstruktur (221) auf der Stufenfläche (104) abgestützt ist.

11. Reinigungsgerät gemäß einem der Ansprüche 8 bis 10, umfassend einen zweiten Antriebsverbindungsbereich (31), wobei die Walzenbürstenvorrichtung einen ersten Antriebsverbindungsbereich (27) umfasst, wobei der erste Antriebsverbindungsbereich (27) mit mindestens einem Wellenende der Walzenbürste (21) in Antriebsverbindung steht, und wobei der zweite Antriebsverbindungsbereich (31) und der erste Antriebsverbindungsbereich (27) zwischen einer Antriebsverbindung und einer Trennung umschalten können.

12. Reinigungsgerät gemäß Anspruch 11, wobei der zweite
Antriebsverbindungsbereich (31) sich entlang einer axialen Richtung der Walzenbürste (21) hin- und herbewegen kann, der zweite Antriebsverbindungsbereich (31) sich zu einer ersten voreingestellten Position entlang einer Richtung weg von dem ersten Antriebsverbindungsbereich (27) bewegt, der zweite Antriebsverbindungsbereich (31) von dem ersten Antriebsverbindungsbereich (27) getrennt ist; der zweite Antriebsverbindungsbereich (31) sich in eine zweite voreingestellte Position entlang einer Richtung zum ersten Antriebsverbindungsbereich (27) hin bewegt, und der zweite Antriebsverbindungsbereich (31) und der erste Antriebsverbindungsbereich (27) in Antriebsverbindung stehen.

13. Reinigungsgerät gemäß Anspruch 11 oder 12, wobei eine Vielzahl von ersten Klauen (271) an einer Seite des ersten Antriebsverbindungsbereichs (27) vorgesehen sind, die dem zweiten Antriebsverbindungsbereich (31) zugewandt ist, eine Vielzahl von zweiten Klauen (311) an einer Seite des zweiten Antriebsverbindungsbereichs (31) vorgesehen sind, die dem ersten Antriebsverbindungsbereich (27) zugewandt ist, und die Vielzahl von zweiten Klauen (311) mit der Vielzahl von ersten Klauen (271) durch Einführen in Eingriff kommen.

14. Reinigungsgerät gemäß einem der Ansprüche 8 bis 13, wobei das Reinigungsgerät ein Roboterstaubsauger ist.

## Revendications

1. Dispositif de rouleau brosse, comprenant :
un rouleau brosse (21) ; et
un ensemble de montage relié au rouleau brosse (21), le rouleau brosse (21) étant rotatif par rapport à l'ensemble de montage, l'ensemble de montage étant capable d'entraîner le rouleau brosse (21) pour se déplacer, un côté de l'ensemble de montage étant pourvu d'une encoche d'évitement (20a), et le rouleau brosse (21) étant exposé au niveau de l'encoche d'évitement (20a),
dans lequel l'ensemble de montage comprend un socle de fixation (22) et une plaque de protection (23), un intérieur du socle de fixation (22) est creux, la plaque de protection (23) est agencée de manière étanche dans l'intérieur du socle de fixation (22) pour séparer un espace dans le socle de fixation (22) en un premier espace (22a) et un deuxième espace (22b) isolés l'un de l'autre, et le premier espace (22a) est formé dans au moins une partie de la cavité de logement (20c),
**caractérisé en ce que** le dispositif de rouleau brosse comprend en outre une portion de levage (25) reliée au socle de fixation (22), et au moins une partie de la portion de levage (25) est exposée au niveau d'un côté supérieur du socle de fixation (22).

2. Dispositif de rouleau brosse selon la revendication 1, dans lequel l'ensemble de montage est pourvu d'une cavité de logement (20c) et d'une sortie d'air (20b), le rouleau brosse (21) comprend un arbre de rouleau brosse (210) et une soie (211), l'arbre de rouleau brosse (210) est agencé dans la cavité de logement (20c), l'encoche d'évitement (20a) est agencée sur un côté inférieur de la cavité de logement (20c) ; la sortie d'air (20b) est agencée sur un côté de la cavité de logement (20c) différent du côté inférieur, et un écoulement d'air dans la cavité de logement (20c) est capable d'être évacué de la cavité de logement (20c) travers la sortie d'air (20b).

3. Dispositif de rouleau brosse selon la revendication 1 ou 2, dans lequel l'ensemble de montage comprend un couvercle inférieur (24) et un socle de fixation (22), le couvercle inférieur (24) est relié de manière amovible au socle de fixation (22), l'encoche d'évitement (20a) est formée sur le couvercle inférieur (24), le rouleau brosse (21) comprend un arbre de rouleau brosse (210) et une soie (211), et l'arbre de rouleau brosse (210) est monté sur le socle de fixation (22) et/ou le couvercle inférieur (24).

4. Dispositif de rouleau brosse selon la revendication 3, dans lequel le couvercle inférieur (24) comprend une plaque inférieure (241) et une portion de jupe (242) s'étendant depuis un bord de la plaque inférieure (241) vers le socle de fixation (22), l'encoche d'évitement (20a) est formée sur la plaque inférieure (241), deux côtés de la portion de jupe (242) dans une direction axiale du rouleau brosse (21) sont pourvus d'une première encoche de montage (24a), deux côtés du bas du socle de fixation (22) sont pourvus d'une deuxième encoche de montage (22c), et la première encoche de montage (24a) et la deuxième encoche de montage (22c) correspondante renferment un trou de montage (20d), et deux extrémités axiales de l'arbre de rouleau brosse (210) passent en rotation à travers le trou de montage (20d).

5. Dispositif de rouleau brosse selon la revendication 3 ou 4, dans lequel une face d'extrémité inférieure du couvercle inférieur (24) éloignée du socle de fixation (22) est formée dans une face inclinée, le dispositif de rouleau brosse comprend en outre une portion de support de rouleau (28) agencée en rotation au niveau d'un côté inférieur de la face d'extrémité inférieure du couvercle inférieur (24), au moins une partie de la portion de support de rouleau (28) fait saillie depuis la face d'extrémité inférieure du couvercle inférieur (24), et une ligne de centre de rotation de la portion de support de rouleau (28) est parallèle à une ligne de centre de rotation du rouleau brosse (21), dans lequel la portion de support de rouleau (28) est de préférence formée dans un arbre de rouleau.

6. Dispositif de rouleau brosse selon l'une quelconque des revendications 1 à 5, dans lequel le socle de fixation (22) est constitué d'un matériau transparent.

7. Dispositif de rouleau brosse selon l'une quelconque des revendications 1 à 6, comprenant : une première portion de liaison d'entraînement (27) reliée par entraînement à au moins une extrémité d'arbre du rouleau brosse (21).

8. Appareil de nettoyage, comprenant : une portion de corps principal (10) et un dispositif de rouleau brosse (20) selon l'une quelconque des revendications 1 à 7, dans lequel la portion de corps principal (10) est pourvue d'une cavité de montage (101) à l'intérieur de celle-ci, un côté inférieur de la cavité de montage (101) est pourvu d'une première ouverture (102), le rouleau brosse (21) est exposé au niveau de la première ouverture (102), un côté de la cavité de montage (101) différent du côté inférieur est pourvu d'une deuxième ouverture (103), et le dispositif de rouleau brosse est capable d'être monté dans la cavité de montage (101) ou retiré de celle-ci à travers la deuxième ouverture (103).

9. Appareil de nettoyage selon la revendication 8, dans lequel la deuxième ouverture (103) est prévue au niveau d'un côté supérieur de la portion de corps principal (10).

10. Appareil de nettoyage selon la revendication 8 ou 9, dans lequel une paroi intérieure de la cavité de montage (101) est pourvue d'une surface étagée (104), l'ensemble de montage est pourvu d'une structure de bride (221), et la structure de bride (221) est supportée sur la surface étagée (104).

11. Appareil de nettoyage selon l'une quelconque des revendications 8 à 10, comprenant une deuxième portion de liaison d'entraînement (31), le dispositif de rouleau brosse comprenant une première portion de liaison d'entraînement (27), la première portion de liaison d'entraînement (27) étant reliée par entraînement à au moins une extrémité d'arbre du rouleau brosse (21), et la deuxième portion de liaison d'entraînement (31) et la première portion de liaison d'entraînement (27) étant capables de commuter entre une liaison d'entraînement et un débranchement.

12. Appareil de nettoyage selon la revendication 11, dans lequel la deuxième portion de liaison d'entraînement (31) est capable de se déplacer en va-et-vient dans une direction axiale du rouleau brosse (21), la deuxième portion de liaison d'entraînement (31) se déplace à une première position prédéfinie dans une direction d'éloignement de la première portion de liaison d'entraînement (27), la deuxième portion de liaison d'entraînement (31) est débranchée de la première portion de liaison d'entraînement (27) ; la deuxième portion de liaison d'entraînement (31) se déplace à une deuxième position prédéfinie dans une direction vers la première portion de liaison d'entraînement (27), et la deuxième portion de liaison d'entraînement (31) et la première portion de liaison d'entraînement (27) sont reliées par entraînement.

13. Appareil de nettoyage selon la revendication 11 ou 12, dans lequel une pluralité de premières griffes (271) sont prévues au niveau d'un côté de la première portion de liaison d'entraînement (27) orienté vers la deuxième portion de liaison d'entraînement (31), une pluralité de deuxièmes griffes (311) sont prévues au niveau d'un côté de la deuxième portion de liaison d'entraînement (31) orienté vers la première portion de liaison d'entraînement (27), et la pluralité de deuxièmes griffes (311) se mettent en prise avec une pluralité des premières griffes (271) par insertion.

14. Appareil de nettoyage selon l'une quelconque des revendications 8 à 13, dans lequel l'appareil de nettoyage est un robot aspirateur.
